# EUROPEAN PATENT APPLICATION

(11) **EP 4 407 726 A1**
(43) Date of publication of application: **31.07.2024**
(21) Application number: 23153070.0
(22) Date of filing: 24.01.2023
(51) Int. Cl.: H01M 10/04, H01M 10/6551, H01M 50/20, H01M 50/218, H01M 50/258

(54) **HOUSING FOR AN ENERGY STORAGE**

(71) Applicant: KNORR-BREMSE Systeme für Nutzfahrzeuge GmbH, 80809 München (DE)
(72) Inventor: BIRKÁS, Balázs Viktor, 1115 Budapest (HU); MLINÁRCSEK, Csaba, 1165 Budapest (HU); LINDNER, Peter, 2300 Ráckeve (HU)

(57) **Abstract**

A housing (1) for an energy storage is disclosed, wherein the housing (1) comprises an extruded portion (9) made by an extruding process, wherein the extruded portion (9) forms a cavity extending along an extruding direction (10).

Further, an energy storage and a method for producing a housing are disclosed.

## Description

The present invention relates to a housing for an energy storage and to an energy storage. Further, the present invention relates to a method for producing a housing for an energy storage.

Electric energy storages are used in vehicles in different shapes and designs, since there are different requirements on the electric storage from case to case. Existing housings are for example made of sheet metal and therefore, e.g. if the number of battery cell packs of the energy storage is changed, the housing hast to be redesigned, which leads to increasing costs and to an increasing number of necessary tools.

Therefore, it is an object of the present invention, to provide a solution to overcome this problem.

This object is achieved by the subject-matter of the independent claims. Advantageous embodiments are subject-matters of the dependent claims.

According to the invention, a housing for an energy storage, in particular for storing electrical energy, preferably with electrochemical energy storage technologies, is provided. The housing comprises an extruded portion made by an extruding process, wherein the extruded portion forms a cavity extending along an extruding direction. The extruding direction is the direction, the extruded portion is extruded during the manufacturing process. Preferably, the extruding direction is the direction the extruded portion has the largest extent compared to the extent of the extruded portion in other spatial directions.

Advantageously, by changing the extension of the extruded portion in the extruding direction, the housing can easily be adjusted according to an increased or decreased number of components provided in the cavity, in particular electrochemical energy storage units/modules like battery cell packs or supercapacitors or supercapacitor packs. Hence, an energy storage comprising such housing and tailored to the customer voltage, energy and power demands can be provided. The extension of the extruded portion in the extruding direction may be adjusted by adjusting the point of time the extruding process is stopped, as described later.

An extruded portion of a housing for an energy storage has advantages compared to housings which are produced in other ways. Aluminium or plastic casting for forming the housing or a portion of the housing requires expensive and complicated tooling. If a length of the portion produced by casting shall be adjusted, a new tool is mandatory. The replacing of the tool is an expensive and time-consuming process. Producing of a portion of the housing by an extruding process may lead to a more cost-effective and more flexible way to produce such a housing.

Preferably, the cavity extending along the extruding direction is configured to surround at least one component of the energy storage.

Preferably, the cavity extending along the extruding direction comprises at least one fastening element configured to fasten at least one component of the energy storage within the cavity.

Preferably, the extruded portion comprises or consists of a synthetic material, in particular plastic, or metal, in particular aluminium or steel.

Preferably, due to the extruding process, the extruded portion only comprises walls extending in parallel to the extruding direction. I.e. the extruded portion itself does not comprise any walls closing the cavity in the extruding direction. Instead, the extruded portion comprises a first aperture and a second aperture along the extruding direction, wherein both apertures are opposite to each other. For assembling of the energy storage, components can be inserted through these apertures. Since these apertures may be the only apertures of the extruded portion, sealing is easier to realise and fewer parts are needed compared to other housing designs.

Preferably, the at least one fastening element is configured as one piece with the extruded portion and produced at least partially, preferably completely, by the manufacturing of the extruded portion. This leads to a simplified production of the fastening element, since it is a part of the extruded portion and provided essentially by the extruding process.

Further, the extrusion of the extruded portion allows to produce different variants of the housing by adjusting the duration of the extrusion process. This leads to a variation in the extension of the extruded portion in the extruding direction. Further, extruding is more cost efficient and needs less production steps compared to other housing designs.

Preferably, the at least one fastening element extends along the extruding direction of the extruded portion. The at least one fastening element may extend along the whole extent of the extruded portion in extruding direction or along a length that is smaller than the length of the extruded portion in the extruding direction. When the at least one fastening element extends only along a length that is smaller than the length of the extruded portion in the extruding direction, the at least one fastening element may be machined after the extruding process. For example, the at least one fastening element may be shortened to the required length by machining. Advantageously, if shortening is required, there are only a few machining steps to carry out after the extruding process.

Preferably, the at least one fastening element is configured to fasten the at least one component transverse to the extruding direction. This allows to insert the at least one component in the extruding direction of the extruded portion when the energy storage is assembled, since the at least one fastening element does not block the movement of the at least one component in this direction.

Preferably, the at least one fastening element is configured to fasten the at least one component along the extruding direction. To fasten the at least one component, the at least one fastening element preferably comprises a fastening portion, in particular with a hole or a recess, the at least one component can be attached to. The fastening portion may be completed after the extruding process by machining the at least one fastening element. For example the fastening portion, in particular the hole or recess, is made by drilling or milling.

Preferably, the at least one fastening element is configured as a slide. The slide extends in particular along the extruding direction. When assembling the housing and the at least one component, in particular a battery cell pack, the slide may be used for leading the at least one component inside the cavity to realise an easier and more robust assembly process. Additionally or alternatively, the slides are configured for fixing the at least one component, in particular the battery cell pack.

Preferably, at least one outer surface of the extruded portion extending along the extruding direction is configured as a heat dissipating surface. Thereby, heat from the cavity produced by components of the energy storage provided within the cavity can be dissipated to the environment. The heat dissipating surface may act as a cooling surface.

Advantageously, the heat dissipating surface comprises or consists of a suitable heat resisting material, like metal (e.g. steel or aluminium), and/or comprises or consists of a material with a suitable increased thermal conductivity compared to other parts of the extruded portion or of the housing.

Preferably, the heat dissipating surface comprises at least one heat dissipating projection extending along the extruding direction. The at least one projection may act as a cooling rib on the heat dissipating surface and increases the surface of the area of the heat dissipating surface to increase the heat output from the housing to the environment.

Alternatively or additionally, at least one inner surface of the extruded portion extending along the extruding direction is configured as a heat absorbing surface. Thereby, heat from the cavity produced by components of the energy storage provided within the cavity can be absorbed. Preferably, the heat absorbing surface comprises or consists of a suitable heat resisting material, like metal (e.g. steel or aluminium) and/or comprises or consists of a material with a suitable increased thermal conductivity compared to other parts of the extruded portion or of the housing, except of the heat dissipating surface. Preferably, the heat absorbing surface comprises at least one projection extending along the extruding direction. The at least one projection may act as a heat absorbing element on the heat absorbing surface and increases the surface of the area of the heat absorbing surface to increase the heat input from the cavity. Preferably, the heat absorbing surface and at least one component of the energy storage that emits heat inside the cavity, are directly opposite one another, I.e. there is no further component or element in-between or the respective component abuts to the heat absorbing surface.

Preferably, the heat dissipating surface and the heat absorbing surface are thermally connected to each other. Thereby, a heat transfer connection is realised for transferring heat from the cavity to the environment.

Preferably, the at least one component of the energy storage comprises a circuit board, in particular a PCB, an electrochemical energy storage unit/module like a battery cell pack or a supercapacitor or a supercapacitor pack and/or an inductor. Preferably, the at least one fastening element of the extruded portion is configured to fasten one or more of these components directly to the extruded portion within its cavity.

By fastening the at least one component directly to the housing by the at least one fastening element, further fastening means, configured as distinguished elements, may be omitted. E.g. gluing of components like battery cells of the battery cell pack may be omitted.

Preferably, the housing comprises a first end plate extending substantially transverse to the extruding direction closing the cavity at a first side of the cavity. The first end plate may be configured as a separate part that is attached to the extruded portion. The first end plate may comprise an electric port, whereby electric power from the energy storage respectively from the battery cell pack provided within the housing may be supplied to at least one consumer. The first end plate may comprise an electronic port, whereby information about the status of the at least one component provided within the housing may be sent to a control unit outside the housing and/or whereby a control parameter may be sent to the at least one component provided within the housing.

Preferably, the first end plate is connected to the extruded portion by fastening means, by welding and/or adhesively, in particular by gluing. As fastening means, e.g. screws may be provided. For engaging with the fastening means, the extruded portion may comprise a hole extending in parallel to the extruding direction, wherein the hole is formed by the extruding process. Preferably, the hole extends over the whole extension of the extruded portion in parallel to the extruding direction. The hole may comprise a thread for engagement with the fastening means, wherein the thread is formed by a separate machining process and the fastening means engages with this thread when the first end plate is attached to the extruded portion. Alternatively or additionally, the fastening means may be configured as a self-forming screw that forms the thread in the hole by screwing-in when the first end plate is attached to the extruded portion. In this case, no separate machining step has to be carried out to form the thread in the hole before the screw is screwed-in. The attachment of the first end plate by welding and/or adhesively seals the cavity sufficiently and a separate sealing may be omitted.

Preferably, the housing comprises a second end plate extending transverse to the extruding direction closing the cavity at a second side of the cavity opposite from the first side in the extruding direction. The second end plate may be configured as the first one. Further, the second end plate may be configured in the same way as the first end plate as described above and/or the second end plate may be attached to the extruded portion in the same way as the first end plate as described above.

Preferably, the housing, in particular the extruded portion, comprises a connection portion configured to be connected to at least one further housing or to a vehicle. This allows to attach several housings to form an energy storage compound in particular for an electric or hybrid vehicle.

Further, an energy storage is provided. The energy storage comprises a housing as described above and at least one component provided within the cavity of the housing. Preferably, the at least one component is fastened to the at least one fastening element within the cavity of the housing. Preferably, the at least one component of the energy storage comprises a circuit board, in particular a PCB, an electrochemical energy storage unit, in particular a battery cell pack, a supercapacitor or a supercapacitor pack, and/or an inductor. Preferably, the at least one fastening element of the extruded portion is configured to fasten one or more of these components directly to the extruded portion within its cavity.

According to the invention, a method for producing a housing as described above is provided. The method comprises the steps:
- determining the extension of the at least one component along the extruding direction;
- determining the extension of the at least one component transverse to the extruding direction;
- determining the required inner shape of the cavity of the extruded portion according to the determined extension of the at least one component;
- providing an extruding tool according to the required inner shape of the cavity; and
- extruding the extruded portion by using the extruding tool along the extruding direction.

Advantageously, by determining the extension of the at least one component along the extruding direction, the method above allows the production of housings with extruded portions of different sizes adapted to the extension of the at least one component.

Preferably, the extruding of the extruded portion is stopped, when the cavity extending along the extruding direction is capable to surround the at least one component. I.e. by adjusting the point of time, the extruding is stopped or by stopping the extruding process when a sufficient extension of the extruded portion along the extruding direction is reached, the extension of the extruded portion may be adjusted.

The extruding tool is configured to form further elements of the extruded portion, which are mentioned above. In particular, the at least one fastening element is formed during the extruding process by the extruding tool. Additionally or alternatively, the at least one outer surface of the extruded portion configured as a heat dissipating surface and/or the at least one inner surface of the extruded portion configured as a heat absorbing surface are formed during the extruding process by the extruding tool. Additionally or alternatively, the connection portion is formed during the extruding process by the extruding tool.

The step of providing the extruding tool may comprise a step of providing or producing a die of the desired cross-section equivalent to the extension of the at least one component transverse to the extruding direction and preferably to form the further elements of the extruded portion. The die is a part of the extruding tool.

During extruding the extruded portion, material for forming the portion is pressed through the die in the extruding direction.

In the following, a preferred embodiment of the invention is described by using the attached drawings.
- Fig. 1: shows a housing with an extruded portion according to the invention and
- Fig. 2: shows the housing shown by Fig. 1 with components of an energy storage provided within the cavity.

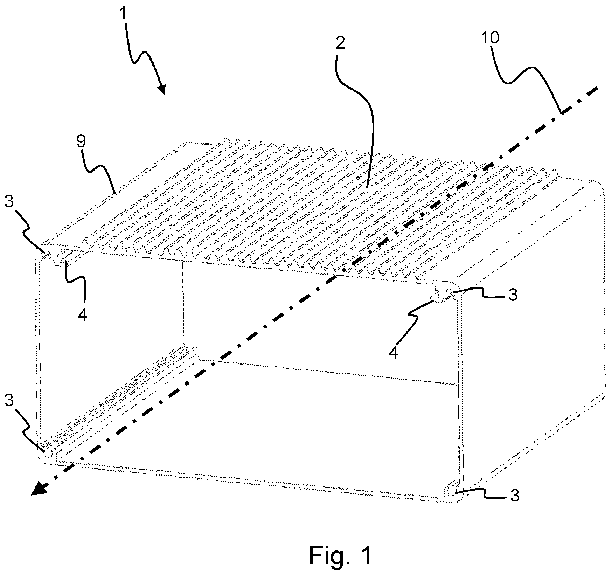

**Fig. 1** shows a housing with an extruded portion according to the invention.

The housing 1 comprises an extruded portion 9 extending in an extruding direction 10, wherein the extruded portion 9 comprises four walls extending in parallel to the extruding direction 10 and forming a cavity inside the extruded portion 9.

Inside the cavity, the extruded portion 9 comprises fastening elements 4 extending along the housing in parallel to the extruding direction 10, wherein the fastening elements 4 are configured as slides.

In the drawing, the cavity is only limited by the walls of the extruded portion 9. I.e. the cavity comprises a first aperture at the front side heading to the observer and the cavity comprises a second aperture opposite to the first aperture against the extruding direction 10.

Further, the extruded portion 9 comprises holes 3 extending along the housing in parallel to the extruding direction 10, wherein the holes 3 are configured to engage with a fastening means, respectively, for attaching a first end plate to the extruded portion 9.

The first and the second aperture can be closed by a first and a second end plate (not shown) which are attached to the extruded portion 9 by fastening means engaging into the holes 3. Thereby, the cavity is sealed.

One outer surface of the extruded portion 9 is configured as a heat dissipating surface 2 comprising several projections extending in parallel to the extruding direction 10. The projections act as cooling ribs on the heat dissipating surface 2 and increase the surface of the area of the heat dissipating surface 2 to increase the heat output from the housing 1 to the environment.

The extruded portion 9 is formed by an extruding process. I.e. advantageously, each component of the extruded portion 9 extends particularly along the extruding direction 10. This allows the production of the extruded portion 9, the fastening elements 4, the holes 3 and/or the heat dissipating surface 2 as one piece by only one processing step.

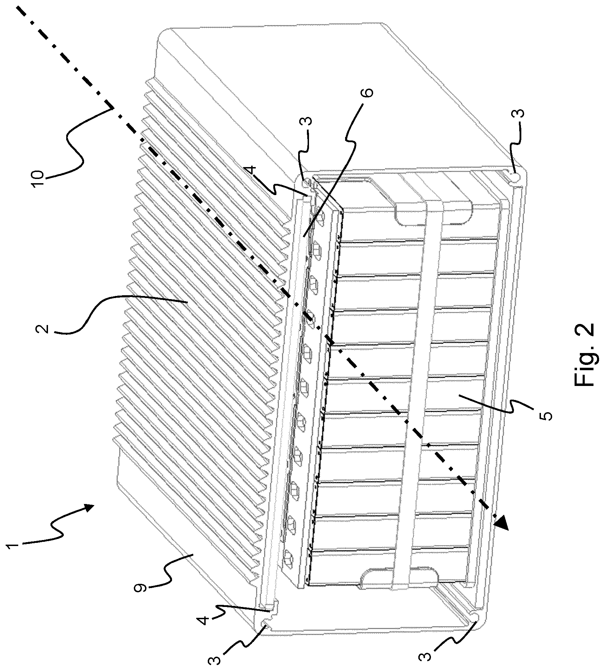

**Fig. 2** shows the housing shown by Fig. 1 with components of an energy storage provided within the cavity.

In the cavity, a battery cell pack 5 and a circuit board 6 are provided. The circuit board 6 is configured to control the energy storage and in particular the extraction and supply of energy from or to the battery cell pack 5.

For assembling, both components 5, 6 of the energy storage are inserted along the fastening elements 4 and in parallel to the extruding direction 10 to their assembling position. There, the battery cell pack 5 or the circuit board 6 may engage with a fastening portion of the fastening elements 4. For engaging, the fastening portion may comprise a hole or a recess.

The circuit board 6 faces the inside surface of the wall (acting as heat absorbing surface) of the extruded portion 9 that comprises the heat dissipating surface 2, wherein no further component is placed between the circuit board 6 and this inside surface. Therefore, heat from the circuit board 6 can be dissipated optimally via the heat dissipating surface 2 to the environment.

### LIST OF REFERENCE SIGNS

- 1: housing
- 2: heat dissipating surface
- 3: hole
- 4: fastening element
- 5: battery cell pack
- 6: circuit board
- 9: extruded portion
- 10: extruding direction

## Claims

1. Housing (1) for an energy storage, wherein
the housing (1) comprises an extruded portion (9) made by an extruding process, wherein the extruded portion (9) forms a cavity extending along an extruding direction (10).

2. Housing (1) according to claim 1, wherein
the cavity comprises at least one fastening element (4) configured to fasten at least one component of the energy storage within the cavity.

3. Housing (1) according to claim 2, wherein
the at least one fastening element (4) extends along the extruding direction (10) of the extruded portion (9).

4. Housing (1) according to claim 2 or 3, wherein
the at least one fastening element (4) is configured to fasten the at least one component transverse to the extruding direction (10).

5. Housing (1) according to one of the claims 2 to 4, wherein
the at least one fastening element (4) is configured to fasten the at least one component along the extruding direction (10).

6. Housing (1) according to one of the claims 2 to 5, wherein
the at least one fastening element (4) is configured as a slide.

7. Housing (1) according to one of the preceding claims, wherein
at least one outer surface of the extruded portion (9) extending along the extruding direction (10) is configured as a heat dissipating surface (2).

8. Housing (1) according to claim 7, wherein
the heat dissipating surface (2) comprises at least one heat dissipating projection extending along the extruding direction (10).

9. Housing (1) according to one of the claims 2 to 8, wherein
the at least one component of the energy storage comprises a circuit board, an electrochemical energy storage unit and/or an inductor.

10. Housing (1) according to one of the preceding claims, wherein
the housing (1) comprises a first end plate extending substantially transverse to the extruding direction (10) closing the cavity at a first side of the cavity.

11. Housing (1) according to claim 10, wherein
the first end plate is connected to the extruded portion (9) by fastening means, by welding and/or adhesively.

12. Housing (1) according to claim 10 or 11, wherein
the housing (1) comprises a second end plate extending transverse to the extruding direction (10) closing the cavity at a second side of the cavity opposite from the first side in the extruding direction (10).

13. Housing (1) according to one of the preceding claims, wherein
the housing (1) comprises a connection portion configured to be connected to at least one further housing (1) or to a vehicle.

14. Energy storage comprising
- a housing (1) according to one of the claims 1 to 13, and
- at least one component provided within the cavity of the housing (1), wherein the at least one component preferably comprises a circuit board, an electrochemical energy storage unit and/or an inductor.

15. Method for producing a housing (1) according to one of the claims 1 to 13 comprising the steps:
- determining the extension of the at least one component along the extruding direction (10);
- determining the extension of the at least one component transverse to the extruding direction (10);
- determining the required inner shape of the cavity of the extruded portion according to the determined extension of the at least one component;
- providing an extruding tool according to the required inner shape of the cavity; and
- extruding the extruded portion by using the extruding tool.
